# EUROPEAN PATENT SPECIFICATION

(11) **EP 1 995 652 B1**
(45) Date of publication and mention of the grant of the patent: **11.01.2012**
(21) Application number: 08156038.5
(22) Date of filing: 12.05.2008
(51) Int. Cl.: G05B 19/042

(54) **Methods and systems for modifying turbine control systems**
Systeme und Verfahren zur Änderung von Turbinensteuersystemen
Procédés et systèmes pour modifier les systèmes de commande des turbines

(30) Priority: 14.05.2007 US 748284
(43) Date of publication of application: 26.11.2008
(73) Proprietor: GENERAL ELECTRIC COMPANY, Schenectady, NY 12345 (US)
(72) Inventor: Lindenmuth, Marc Gavin, Atlanta, GA 30307 (US); Boettner, Fred Henry, Roanoke, VA 24018 (US); Sullivan, Stephen Jeffrey, Loveland, OH 45140 (US); Holzman, Brian Keith, Salem, VA 24153 (US); Weaver, Cecil Ernest, II, Salem, VA 24153 (US); Kopcho, Scott Alan, Atlanta, GA 30309 (US); Gleeson, Eamon Patrick, Atlanta, GA 30306 (US)
(74) Representative: Cleary, Fidelma

(56) References cited:
- EP-A- 1 349 024
- WO-A-03/040882
- WO-A-2005/053255
- GB-A- 2 208 553
- GB-A- 2 359 467
- US-A- 6 070 196
- "Mark V to Mark VIe Migration" January 2007 (2007-01), GE ENERGY CONTROL SOLUTIONS , LOVELAND, CO 80538, USA , XP002493606 * the whole document *
- "Mark IV to Mark VIe Migration" October 2006 (2006-10), GE ENERGY CONTROL SOLUTIONS , LOVELAND, CO 80538, USA , XP002493607 * the whole document *
- DATABASE WPI Week 200024 Thomson Scientific, London, GB; AN 2000-274995 XP002493608 -& JP 2000 059398 A (TOKYO ELECTRIC POWER CO INC) 25 February 2000 (2000-02-25)
- JOHNSON AND R W MILLER AND T ASHLEY D: "SPEEDTRONIC MARK V GAS TURBINE CONTROL SYSTEM", GE POWER SYSTEMS,, no. GER-3658D, 1 January 1996 (1996-01-01) , pages 1-19, XP007910941, [retrieved on 2005-03-10]

## Description

The invention relates generally to turbine control systems, and more particularly relates to methods and systems for modifying hardware of turbine control systems.

Industrial and power generation turbines have control systems that monitor and control their operation. These control systems typically include one or more processor cards configured as main controller processors running application code that implements the control system functions. Additionally, there typically exist processor cards configured as input-output ("IO") processor cards that receive and send signals to and from monitoring devices on the turbines and other peripheral auxiliary equipment. The IO processor cards may interface with terminal boards in communication with the monitoring devices on the turbine or auxiliary equipment. The main controller processors may communicate with each other, with the 10 processors, and with a general communications network using a standard communication protocol. Communication protocols may vary depending upon factors such as the control system application, the site architecture, and the age of the control system. RS485 (also known as EIA-485), RS232, Modbus, ARCNET, Ethernet, and USB are examples of common communication protocols used in control systems.

Older control systems may become outdated and need to be replaced or updated to allow implementing current control system capabilities, such as processing-intensive model-based controls, PID controls, and more powerful application tools, as well as enable communications via open communications protocol interfaces with third party systems. However, it is often preferable to update the control system so as to cause the least impact on the turbine operation. Furthermore, simple and quick upgrades are more cost-effective by requiring less labor, less downtime, and by providing quicker realization of the benefits generated by the upgraded control systems.

To reduce the time during which the turbines are off-line because of a control system upgrade, methods and systems are needed that limit the amount of hardware required to be replaced. Turbine control systems typically have a large number of input and output termination points, for example terminal boards and terminal screws, where peripheral sensor and control devices communicate between the control system and the turbines. A control system upgrade that requires reconnecting each existing input and output termination point is extremely labor-intensive and increases the amount of time during which the turbines are off-line. However, some system upgrades may include replacing hardware, such as new microprocessors that communicate using different (and typically more modem) protocols from the existing IO processor cards communicating with the terminal boards.

In one example, the Mark V turbine control system manufactured by General Electric ("GE") has achieved a large installed base during the many years of production. While the GE Mark V turbine control system remains a viable platform for existing owners who use it today, its ability to accept some control upgrades is limited. As advanced control methods for turbines are developed, an upgrade path is needed for the existing GE Mark V turbine control systems to upgrade to either the GE Mark Ve or GE Mark VIe control systems as discussed in XP002493606. One aspect of the upgrade path includes upgrading at least some of the existing legacy processors to newer, current microprocessors capable of handling more complex operations as required by the upgraded control system logic. However, some preferred microprocessors that may replace the legacy processors are the current 32-bit MPC8xx family-based microprocessors, such as the PowerQUICC processor developed by Freescale Semiconductor, communicating via the Ethernet communication protocol, while some of the legacy processors are 16-bit 80186- or 80196-type processors, as developed by Intel Corporation, that retain the serial RS485 communication protocol. In certain applications, it is desirable to retain some of the legacy processors, particularly those communicating with the terminal boards so as to prevent from reconfiguring all of the terminations, and update others to newer, more advanced processors communicating in a different communication protocol.

Thus, there is a desire for systems and methods that allow efficient control system upgrades, including modifying the processing components.

In accordance with the invention, there is provided a method of modifying a turbine control system in accordance with claim 1 and a control system according to claim 7.

Various embodiments of the invention can address some or all of the needs described above. Embodiments of the invention are directed generally to systems and methods for modifying a turbine control system. According to one embodiment of the invention, a method for modifying a turbine control system may be provided for. The method may include replacing at least one legacy main controller processor communicating in a first communication protocol with a current main control processor communicating in a second communication protocol. The method may further include retaining at least one legacy IO processor in communication with at least one turbine monitoring device communicating in the first communication protocol. Additionally, the method may include providing at least one converter in communication with the current main controller processor or processors and in communication with the legacy IO processor or processors. The converter may translate communications from the current main controller processor or processors from the second communication protocol to the first communication protocol, and may further transmit the communications to the legacy IO processor or processors. The converter may also translate communications from the legacy IO processor or processors from the first communication protocol to the second communication protocol, and may further transmit the communications to the current main controller processor or processors.

According to another embodiment of the invention, control system for controlling at least one turbine may be provided for. The system may include at least one IO processor in communication with at least one turbine monitoring device. The IO processor or processors and the turbine monitoring device or devices may be configured to communicate in a first communication protocol. The system may further include at least one converter in communication with the IO processor or processors. Additionally, the system may include at least one main controller processor in communication with the converter or converters, which may be configured to communicate in a second communication protocol. The converter or converters may be configured to translate communications from the IO processor or processors to the main controller processor or processors by translating the first communication protocol to the second communication protocol. The converter or converters may be configured to translate communications from the main controller processor or processors to the IO processor or processors by translating the second communication protocol to the first communication protocol.

According to yet another embodiment of the invention, a method for modifying a control system including a first processor and a second processor may be provided for. The first and second processors may communicate in a first communication protocol. The method may include replacing the second processor with a third processor communicating in a second communication protocol. The method may further include retaining the first processor. The first processor may be in communication with at least one monitoring device and communicates in the first communication protocol. Additionally, the method may include providing a converter in communication with the first and the third processors. Furthermore, the method may include translating communications from the first processor from the first communication protocol to the second communication protocol, and translating communications from the third processor from the second communication protocol to the first communication protocol. The translations may be done by the converter.

Various other embodiments and aspects of the invention will become apparent from the following description taken in conjunction with the following drawings, in which:
FIG. 1 is a block diagram illustrating a control system architecture.
FIG. 2 is a block diagram illustrating a modified control system architecture.
FIG. 3 is an example flow chart illustrating a method of modifying the control system in FIG. 1.
Embodiments of the invention now will be described more fully hereinafter with reference to the accompanying drawings, in which some, but not all embodiments are shown. Indeed, the subject matter of the present application may be embodied in many different forms and should not be construed as limited to the embodiments set forth herein; rather, these embodiments are provided so that this disclosure will satisfy applicable legal requirements. Like numbers refer to like elements throughout.

The application references block diagrams of systems, methods, apparatuses, and computer program products according to at least one embodiment described herein. It will be understood that at least some of the blocks of the block diagrams, and combinations of blocks in the block diagrams, respectively, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed in detail in the descriptions below.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the block or blocks.

One or more components of the systems and one or more steps of the methods described herein may be implemented through an application program running on an operating system of a computer. They also may be practiced with other computer system configurations, including hand-held devices, multiprocessor systems, microprocessor based, or programmable consumer electronics, mini-computers, mainframe computers, etc.

Application programs that are components of the systems and methods described herein may include routines, programs, components, data structures, etc. that implement certain abstract data types and perform certain tasks or actions. In a distributed computing environment, the application program (in whole or in part) may be located in local memory, or in other storage. In addition, or in the alternative, the application program (in whole or in part) may be located in remote memory or in storage to allow for circumstances where tasks are performed by remote processing devices linked through a communications network. Example embodiments will hereinafter be described with reference to the figures, in which like numerals indicate like elements throughout the several drawings.

According to an embodiment of the invention, upgrading a turbine control system allows implementing current systems advances, such as, performance increasing tools, improved monitoring, more robust reporting, and more responsive and accurate control functions. Embodiments of the systems and methods disclosed in this application allow upgrading some components of the control system, for example main controller processor cards, while retaining other existing components to expedite the upgrade process and limit disruption of the turbine operation. These embodiments of the systems and methods allow upgraded components to communicate with existing, legacy components through the use of one or more converters that perform translations on disparate communication protocols. More specifically, a legacy control system may include one or more main controller processors and one or more input-output ("IO") processors that communicate using the same communication protocol, such as the RS485 protocol. It may be desirable to upgrade the main control processors to current microprocessors that no longer communicate using the same communication protocol as the IO processors, but may communicate using, for example, the Ethernet protocol. Furthermore, modifying the control systems may further increase intersystem communications by allowing the upgraded current control system to communicate to third party systems having open communications protocol interfaces. Accordingly, the embodiments of the systems and methods described herein provide, for example, for upgrading one or more processors, retaining one or more legacy IO processors, and providing a converter to facilitate communication between the legacy IO processors and the current replaced processors in a turbine control system by performing two-way translations between disparate communication protocols. Control system upgrades may be performed in a more productive manner by using these systems and methods because fewer components need to be replaced or reconfigured. More specifically, by retaining the legacy IO processors, the terminations into and out of the control system do not have to be reconfigured, while one or more protocol converters allow for communication between the legacy IO processors and the upgraded main controller processors.

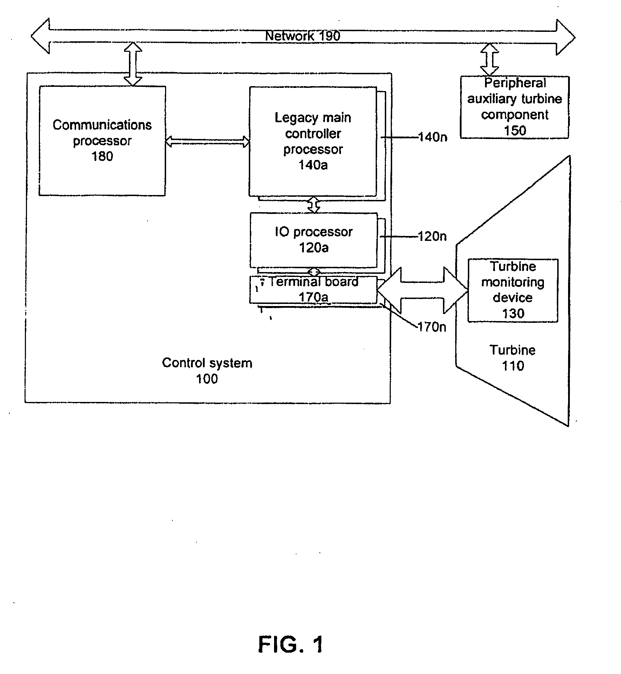

Fig. 1 depicts a control system 100 in communication with a turbine 110. The turbine 110 may be a steam turbine or a gas turbine. An example turbine 110 referred to herein may be a gas turbine. The control system 100 may be a computer based control system running one or more microprocessors as is known in the art. The control system 100 executes control logic consisting of programs and operations to control the operation of the turbine 110 using sensor inputs, instructions from human operators, and computer implemented schedules and/or models. The control command signals generated by the controller 100 may cause actuators on the turbine to, for example, adjust valves between the fuel supply and combustors that regulate the flow, fuel splits, and type of fuel flowing to the combustors; adjust inlet guide vanes on the compressor; adjust inlet bleed heat; as well as activate other control settings on the turbine 110. The control system 100 may be, for example, the GE Mark V turbine control system.

The control system 100 includes one or more IO processors 120a, which may be a card that includes one or more microprocessors configured to communicate with a terminal board or boards 170a. The IO processor 120a may be a discrete processor configured to receive binary data indicating one of two states, typically off/on or yes/no. Alternatively, the IO processor 120a may be an analog acquisition processor configured to receive analog variable signals. The terminal board 170a includes the physical input and output termination points for devices in electrical communication with the control system. For example, the IO processor 120a may communicate, via its connection to the terminal board 170a, with one or more turbine monitoring devices 130, such as, for example, compressor inlet pressure sensors, compressor inlet temperature sensors, compressor discharge pressure sensors, compressor discharge temperature sensors, turbine exhaust temperature sensors, generator power output sensors, strain gauges, or the like, is are known in the art. It is appreciated that more than one IO processors 120a-120n may be included in an embodiment of the control system 100, and that they may be configured in parallel, and that more than one IO processor 120a-120n may receive the same signal so as to maintain redundancy in the system. Further, it is also appreciated that the control system 100 may include both discrete and analog IO processors 120a-120n, each receiving different signal types. Similarly, for each IO processor 120a-120n, there may be one or more terminal boards 170a-170n.

The control system 100 further includes at least one legacy main controller processor 140a configured to execute the control system logic. The legacy main controller processor 140a may be a card that includes a microprocessor or microcontroller, as is known in the art. Furthermore, the legacy main controller processor 140a may include more than one microprocessor, each performing separate functions of the legacy main controller processor 140a, for example, communicating with other hardware components in the control system 100 and performing the control logic operations. Additionally, multiple microprocessors in the legacy main controller processor 140a may perform the same functions as a redundant design. For simplicity, the legacy main controller processor 140a will be referred to herein as a single component, despite the many alternative configurations as are known in the art. The legacy main controller processor 140a is configured to ultimately communicate with the IO processors 120a, to receive operating measurements as sensed by the one or more turbine monitoring devices 130, as described above, and to send control command signals to the IO processors 120a to cause a response in the operation of the turbine 110. There may be another processor or processors, the communications processor 180, for communicating, via a legacy network 190, with other peripheral auxiliary turbine components 150, such as sensors, monitors, or control devices, for example, other control panels, for example, an excitation panel controlling the generator excitation field, or a human machine interface. The communications processor 180 also may be in communication with the legacy main controller processor 140a and a second IO processor 120a. In addition, the communications processor may be the means by which the control system communicates with the legacy network 190, such as a plant network providing connectivity with other devices, control systems, human machine interfaces, or the like. In this embodiment, the communications processor 180 and the legacy network 190 communicate using the same communications protocol, for example the ARCNET protocol. In another embodiment, the legacy main controller processor 140a may communicate with other peripheral auxiliary turbine components 150 via the legacy network 190.

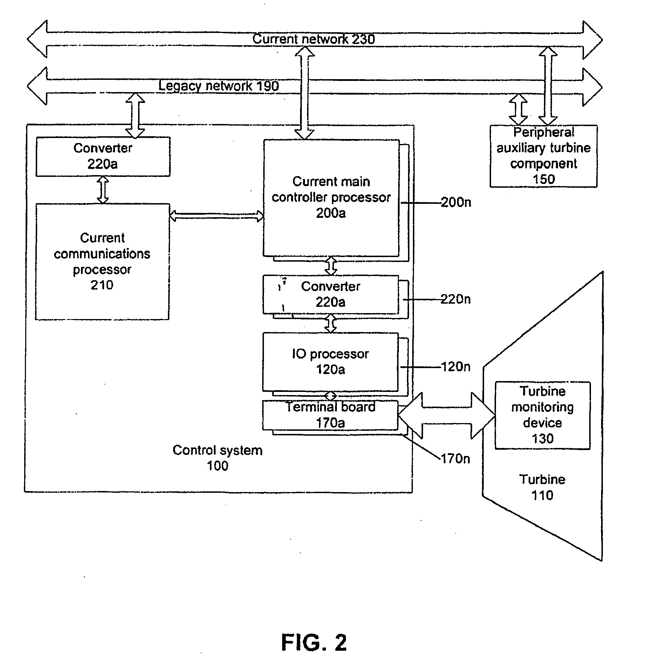

It is appreciated by those skilled in the art that the configuration of the control system 100 components as described in reference to FIG. 1 (and FIG. 2 below) are shown by way of example, and that other configurations are possible as relating to the subject matter of this application. For example, the control system 100 may include multiple legacy main controller processors 140a-140n in parallel communication with each other so as to provide redundant communications and eliminate a single point of failure at the point of the legacy main controller processor 140a-140n. An example of redundant main controller processors 140a-140n is the legacy main controller processor 140a-140n configured in a triple redundant configuration having three similarly configured legacy main controller processors 140a-140n in parallel communication. Alternatively, the control system 100 may include a single legacy main controller processor 140a configured in a simplex, non-redundant configuration. In another example, while processors are referred to as standalone components any processor discussed herein may be one component of a core, which is made up of processor cards and boards. For example one core may include a legacy main controller processor 140a (on a processor card), an IO processor 120a (on a processor card), and a termination board 170a (on a board), each in electrical communication with each other as described herein. It is appreciated that the examples provided herein are not intended to be limiting.

In one embodiment of this application, as shown in FIG. 2, the legacy main controller processor 140a is to be upgraded from an older, less sophisticated processor to a more current microprocessor, or a card including one or more microprocessors or microcontrollers, as is known in the art. For simplicity, an upgraded main controller will be referred to as the current main controller processor 200a herein. The main controller upgrade, or retrofit, may be performed for multiple reasons, including allowing more advanced control logic to be run by the control system, such as advanced modeling or predictive controlling of the turbine behavior, and to improve device communication and connectivity technology. In one illustrative example, a GE Mark V turbine control system may include the legacy main controller processor 140a running on 16-bit 80186/80196-type processors, as developed by Intel Corporation. New advances in turbine control systems, such as functionality available in the GE Mark Ve or the GE Mark VIe control systems, may be included in legacy control systems after upgrading the legacy main controller processor 140a to the current main controller processor 200a, using current components, such as a 32-bit MPC8xx family-based microprocessors, like the PowerQUICC processors developed by Freescale Semiconductor. In this example, the legacy main controller processors 140a communicate using the RS485 communication protocol, while the current main controller processor 200a is capable of communicating in the Ethernet communication protocol, or a variation thereof, as is known in the art. Further, upgrading to the current main controller processor 200a allows connectivity to an upgraded current network 230 based on the Ethernet protocol, rather than limiting connectivity via the communications processor 180 (or the current communications processor 210 as described further below) to a network 190 based on the ARCNET protocol as discussed in reference to FIG. 1.

However, in this embodiment of the application, the IO processors 120a remain the legacy IO processors 120a and are not upgraded. One reason to retain the legacy IO processors 120a is to eliminate the need to replace and/or reconfigure the legacy input and output terminations at the terminal boards 170a. Retaining the legacy terminations increases the reliability and quality of the upgrade by reducing any errors that may result from reconfiguring and re-terminating each input and output connector. Furthermore, upgrade completion times may be drastically reduced by eliminating the need to reconfigure the legacy terminations. However, in this embodiment, the legacy IO processors 120a communicated with the legacy main controller processors 140a using the RS485 communication protocol before the upgrade, and cannot directly communicate with components communicating in a different communication protocol, such as the Ethernet protocol, like the upgraded current main controller processor 200a.

Accordingly, one or more converters 220a, also referred to as gateways or communication bridges, are included in the turbine control system 100. The converter 220a is in communication with the legacy IO processor 120a and the current main controller processor 200a, performing translation from one communication protocol to another while transmitting communication signals between the two. In this embodiment, the converter 220a receives RS485 communication signals from the legacy 10 processor 120a and translates them to the Ethernet protocol prior to completing the transmission of the communication signals to the current main controller processor 200a. Likewise, the converter 220a receives Ethernet communication signals from the current main controller processor 200a and translates them to the RS485 protocol prior to completing the transmission of the communication signals to the legacy IO processor 120a.

Similarly, in a further embodiment also including one or more peripheral auxiliary turbine components 150, as discussed above, communicating via the legacy network 190 in yet another communication protocol, such as ARCNET, another converter 220a may send and receive signals to and from the peripheral auxiliary turbine components 150, for example, an excitation panel controlling a generator excitation field, and the current main controller processor 200a, translating the communication signals between the Ethernet and ARCNET communication protocols.

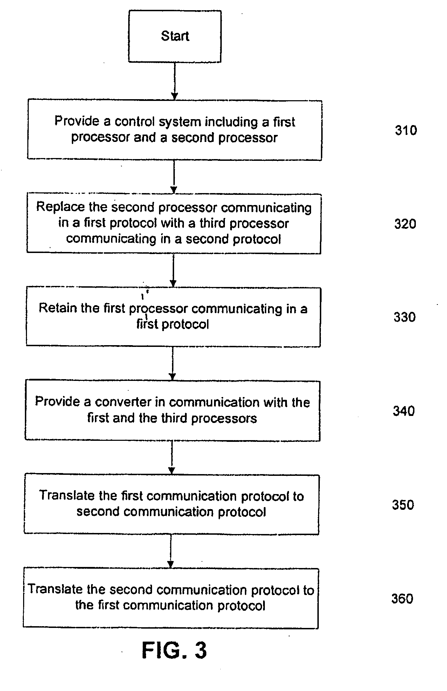

In another embodiment, the communications processor 180, as described in reference to FIG. 1, may be upgraded like the current main controller processor 200a, in reference to FIGS. 2 and 3, to a current communications processor 210. The current communications processor 210 may be configured to communicate with other peripheral auxiliary turbine components 150, via the legacy network 190, that communicate in a third communication protocol, such as the ARCNET protocol. In this embodiment, a second converter 220a is included to translate communications between the current communications processor 210 and the other peripheral c auxiliary turbine components 150 - between the ARCNET protocol and the Ethernet protocol. Further, upgrading to the current communications processor 210 and including the converter 220a allows a turbine control system upgrade that is non-invasive to other devices on the legacy network 190, whereas the current main controller processor 200a allows connectivity to the current network 230 design based on the Ethernet protocol rather than limiting connectivity to only the legacy network 190 based on the ARCNET protocol. It is appreciated by those having skill in the art that during the upgrade to the control system 100, other components communicating in different communication protocols may be in communication with yet other converters 220a, so as to translate between each of the communication protocols, allowing for partial upgrades, or retrofitting, of some new, current components while retaining other existing, legacy components. Other examples of communication protocols that may be translated by one or more converters are RS232, Modbus, and USB. Furthermore, it is also appreciated by those having skill in the art that where one converter 220a is provided, multiple converters 220a-220n may be provided. For example, like the main controller processors 140a-140n described above, multiple converters 220a-220n may be configured in a redundant, parallel configuration. Also, where there may be multiple first processors, such as different legacy IO processors 120a communicating with multiple different turbine monitoring devices 130, or multiple current communications processors 210 communicating with multiple different legacy peripheral auxiliary turbine components 150, there may be multiple converters 220a providing translation between each of those and the current communications processors 200.

In one embodiment of the present invention, the converter 220a may be configured as a processor board having two cards, a data acquisition card and a processor card. The data acquisition card may, for example, utilize FPGA components, as is known in the art, and communicate signals received to the processor card for converting the communications protocol. The converter 220a configured to communicate between the main controller processor 200a and legacy IO processor 120a communicating in RS485 protocol may include, for example, an RS485 TSP serial bus connector, as is known in the art, for sending and receiving signals in the RS485 communications protocol, and one or more Ethernet RJ-45 connectors, as are known in the art, for sending and receiving signals in the Ethernet communications protocol. The converter 220a configured to communicate between the main controller processor 200a and the legacy network 190 communicating in ARCNET protocol may include, for example, BNC coaxial connector, as is known in the art, for sending and receiving signals in the ARCNET communication protocol, and one or more Ethernet RJ-45 connectors for sending and receiving signals in the Ethernet communication protocol. Further, the converter 220a may be included as a component on the main controller processor core and communication processor core.

FIG. 3 shows an illustrative embodiment of a method to upgrade the control system 100 as described in reference to FIG. 1. At block 310, a control system 100 having at least two processors is provided for. The first processor may be, for example, the legacy IO processor 120a. The second processor may be, for example, the legacy main controller processor 140a in communication with the legacy IO processor 120a. Furthermore, according to this example embodiment, the first processor and the second processor communicate using the same communication protocol. For example, in a GE Mark V control system, the legacy main controller processor 140a and the IO processor 120a communicate using the RS485 communication protocol, thus allowing them to communicate directly without performing protocol conversion. Additionally, the legacy IO processor 120a may be in communication with, via the terminal board 170a, and receive operating measurements from one or more turbine monitoring devices 130, as described above. This or other legacy IO processors 120a in communication with the legacy main controller processor 200a may also transmit control command signals as received from the legacy main controller 200a to cause a response in the turbine 110 operation.

At block 320, the second processor is replaced with a third processor as part of an upgrade of the control system 100. In this example, the legacy main controller processor 140a is replaced with a current main controller processor 200a. The reasons for exchanging the processor during the upgrade, for example, to allow for upgraded control logic or improved inter- and intra-device communication, are explained above. In alternate variations of this embodiment, the control system 100 may include multiple main controller processors in redundant, parallel communication, wherein each of the legacy main controller processors 140a-140n are replaced with new current main controller processors 200a-200n to retain the redundant, parallel communication.

At block 330, the first processor, for example the legacy IO processor 120a, is retained, so as to also retain the existing terminal boards 170a to preserve the input and output terminations. Accordingly, because the first processor is configured to communicate using the same protocol as the second processor replaced at block 220, and because the upgraded third processor communicates using a different communication protocol, the first processor can no longer communicate directly with the third processor (e.g., the legacy IO processor 120a cannot communicate directly with the current main controller processor 200a).

To translate the different communication protocols, a converter 220a is provided for during the upgrade at block 340. At block 350, the converter 220a is configured to receive communications from the first processor in a first communication protocol, translate the communications from the first communication protocol to a second communication protocol, and further transmit the communication to the third processor capable of communicating in the second communication protocol. Similarly, at block 360, the converter 220a is configured to receive communications from the third processor in the second communication protocol, translate the communications from the second communication protocol to the first communication protocol, and further transmit the communication to the first processor capable of communicating in the first communication protocol.

In this example, the converter 220a facilitates communication between the legacy IO processor 120a and the current main controller processor 200a by receiving, translating, and further transmitting messages between each component. In this example, legacy IO processor 120a communicates using the RS485 communication protocol and the current main controller processor 200a communicates using the Ethernet communication protocol. Thus, the converter 220a translates messages sent to the current main controller 200a to the Ethernet communication protocol (at block 350) and translates messages sent to the legacy IO controller 120a to the RS485 communication protocol (at block 360).

Retaining the legacy IO control cards, while upgrading the main controller cards, avoids the timely and complicated processes of reconfiguring and reconnecting the terminations into and out of the control system. Thus, by providing one or more converters to translate the communications between upgraded hardware and legacy hardware, more efficient and quicker upgrades, and opportunities for running control systems having improved performance and features, are provided for.

Many modifications and other embodiments of the example descriptions set forth herein will come to mind to one skilled in the art to which these descriptions pertain having the benefit of the teachings presented in the foregoing descriptions and the associated drawings. Thus, it will be appreciated by those of ordinary skill in the art that the subject matter of this application may be embodied in many forms and should not be limited to the embodiments described above. Therefore, it is to be understood that the application is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of modifying a turbine control system (100), comprising:
replacing at least one existing main controller processor (140a) communicating in a first communication protocol, with at least one current main control processor (200a) communicating in a second communication protocol;
retaining at least one existing IO processor (120a) in communication with at least one turbine monitoring device (130) communicating in said first communication protocol;
**characterised by**
providing a first converter (220a) in communication with said at least one current main controller processor (200a) and in communication with said at least one existing IO processor (120a);
wherein said first converter (220a) translates communications from said at least one current main controller processor (200a) from said second communication protocol to said first communication protocol and further transmits the translated communications to said at least one existing IO processor (120a); and
wherein said first converter (220a) translates communications from said at least one existing IO processor (120a) from said first communication protocol to said second communication protocol and further transmits the translated communications to said at least one current main controller processor (200a), further comprising:
replacing at least one existing communications processor (180) communicating in a third communication protocol with a current communications processor (210) communicating in the second communication protocol;
retaining at least one existing peripheral auxiliary turbine component (150) communicating in said third communication protocol; and
providing a second converter (220a) in communication with said at least one existing peripheral auxiliary turbine component (150) and in communication with said at least one current communications processor (210);
wherein said second converter (220a) translates communications from said at least one current communications processor (210) from said second communication protocol to said third communication protocol and further transmits the communications to said at least one peripheral auxiliary turbine component (150); and
wherein said second converter (220a) translates communications from said at least one existing peripheral auxiliary turbine component (150) from said third communication protocol to said second communication protocol and further transmits the communications to said at least one current communications processor (210).

2. The method of claim 1, wherein said first communication protocol is RS485 protocol or ARCNET protocol; and wherein said second communication protocol is Ethernet protocol.

3. The method of any preceding claim, further comprising retaining at least one existing terminal board (170a) in communication with said at least one existing IO processor (120a).

4. The method of any preceding claim, wherein said at least one existing main controller processor (140a) communicating in said first communication protocol is associated with an existing turbine control system; and wherein said current main control processor (200a) communicating in said second communication protocol is associated with current turbine control system.

5. The method of any of the preceding claims, wherein said at least one existing peripheral auxiliary turbine component (150) comprises a second control system.

6. The method of any of the preceding claims, wherein said third communication protocol is ARCNET protocol.

7. A control system for controlling at least one turbine, comprising:
at least one IO processor (120a) in communication with at least one turbine monitoring device (130), and configured to communicate in a first communication protocol;
wherein
the IO processor (120a) is an existing IO processor retained during a system upgrade,
and further comprising:
a first converter (220a) first in communication with said at least one IO processor (120a); and
at least one main controller processor (200a) in communication with said first converter (220a), and configured to communicate in a second communication protocol;
wherein said first converter (220a) is configured to translate communications from said at least one IO processor (120a) to said at least one main controller processor (200a) by translating said first communication protocol to said second communication protocol, and to translate communications from said at least one main controller processor (200a) to said at least one IO processor (120a) by translating said second communication protocol to said first communication protocol, further comprising:
a current communications processor (210) communicating in the second communication protocol; at least one existing peripheral auxiliary turbine component (150) communicating in a third communication protocol via an existing network (190); and
a second converter (220a) in communication with said at least one existing peripheral auxiliary turbine component (150) and in communication with said current communications processor (210);
wherein said second converter (220a) translates communications from said current communications processor (210) from said second communication protocol to said third communication protocol and further transmits the translated communications to said at least one existing peripheral auxiliary turbine component (150); and
wherein said second converter (220a) translates communications from said at least one existing peripheral auxiliary turbine component (150) from said third communication protocol to said second communication protocol and further transmits the translated communications to said current communications processor (210).

8. The system of claim 7, wherein said first communication protocol is RS485 protocol or ARCNET protocol; and wherein said second communication protocol is Ethernet protocol.

9. The system of claim 7 or claim 8, further comprising at least one existing terminal board (170a) in communication with said at least one IO processor (120a).

## Patentansprüche

1. Verfahren zum Modifizieren eines Turbinensteuerungssystems (100), mit den Schritten:
Ersetzen wenigstens eines vorhandenen Hauptsteuerungsprozessors (140a), der in einem ersten Kommunikationsprotokoll kommuniziert, durch wenigstens einen aktuellen Hauptsteuerungsprozessor (200a), der in einem zweiten Kommunikationsprotokoll kommuniziert;
Beibehalten wenigstens eines vorhandenen IO-Prozessors (120a) in Kommunikation mit wenigstens einer Turbinenüberwachungsvorrichtung (130), die in dem ersten Kommunikationsprotokoll kommuniziert;
**gekennzeichnet durch**:
Bereitstellen eines ersten Wandlers (220a) in Kommunikation mit dem wenigstens einen aktuellen Hauptsteuerungsprozessor (200a) und in Kommunikation mit dem wenigstens einen vorhandenen IO-Prozessor (120a);
wobei der erste Wandler (220a) Kommunikation von dem wenigstens einem aktuellen Hauptsteuerungsprozessor (200a) von dem zweiten Kommunikationsprotokoll in das erste Kommunikationsprotokoll übersetzt und ferner die übersetzte Kommunikation an den wenigstens einen vorhandenen IO-Prozessor (120a) überträgt; und
wobei der erste Wandler (220a) Kommunikation von dem wenigstens einem vorhandenen IO-Prozessor (120a) von dem ersten Kommunikationsprotokoll in das zweite Kommunikationsprotokoll übersetzt und ferner die übersetzte Kommunikation an den wenigstens einen aktuellen Hauptsteuerungsprozessor (200a) überträgt, ferner mit den Schritten:
Ersetzen wenigstens eines vorhandenen Kommunikationsprozessors (180), der in einem dritten Kommunikationsprotokoll mit einem in dem zweiten Kommunikationsprotokoll kommunizierenden aktuellen Kommunikationsprozessor (210) kommuniziert;
Beibehalten wenigstens einer vorhandenen peripheren Hilfsturbinenkomponente (150), die in dem dritten Kommunikationsprotokoll kommuniziert; und
Bereitstellen eines zweiten Wandlers (220a) in Kommunikation mit der wenigstens einen vorhandenen peripheren Hilfsturbinenkomponente (150) und in Kommunikation mit dem wenigstens einen aktuellen Kommunikationsprozessor (210);
wobei der zweite Wandler (220a) Kommunikation von dem wenigstens einen aktuellen Kommunikationsprozessor (210) von dem zweiten Kommunikationsprotokoll in das dritte Kommunikationsprotokoll übersetzt und ferner die Kommunikation an die wenigstens eine periphere Hilfsturbinenkomponente (150) überträgt; und
wobei der zweite Wandler (220a) Kommunikation von der wenigstens einen vorhandenen peripheren Hilfsturbinenkomponente (150) von dem dritten Kommunikationsprotokoll in das zweite Kommunikationsprotokoll übersetzt und ferner die Kommunikation an den wenigstens einen aktuellen Kommunikationsprozessor (210) überträgt.

2. Verfahren nach Anspruch 1, wobei das erste Kommunikationsprotokoll das RS485-Protokoll oder ARCNET-Protokoll ist; und wobei das zweite Kommunikationsprotokoll das Ethernet-Protokoll ist.

3. Verfahren nach einem der vorstehenden Ansprüche, welches ferner den Schritt der Beibehaltung wenigstens einer vorhandenen Endgerätekarte (170a) in Kommunikation mit dem wenigstens einem vorhandenen IO-Prozessor (120a) aufweist.

4. Verfahren nach einem der vorstehenden Ansprüche, wobei der wenigstens eine vorhandene Hauptsteuerungsprozessor (140a), der in dem ersten Kommunikationsprotokoll kommuniziert, einem vorhandenen Turbinensteuerungssystem zugeordnet ist; und wobei der aktuelle Hauptsteuerungsprozessor (200a), der in dem zweiten Kommunikationsprotokoll kommuniziert, einem aktuellen Turbinensteuerungssystem zugeordnet ist.

5. Verfahren nach einem der vorstehenden Ansprüche, wobei die wenigstens eine vorhandene periphere Hilfsturbinenkomponente (150) ein zweites Steuerungssystem aufweist.

6. Verfahren nach einem der vorstehenden Ansprüche, wobei das dritte Kommunikationsprotokoll das ARCNET-Protokoll ist.

7. Steuerungssystem zum Steuern wenigstens einer Turbine, aufweisend:
wenigstens einen IO-Prozessor (120a) in Kommunikation mit wenigstens einer Turbinenüberwachungsvorrichtung (130) und dafür eingerichtet, in einem ersten Kommunikationsprotokoll zu kommunizieren;
wobei der IO-Prozessor (120a) ein vorhandener IO-Prozessor ist, der während einer Systemaktualisierung beibehalten wird, und ferner aufweist:
einen ersten Wandler (220a) in Kommunikation mit dem wenigstens einen IO-Prozessor (120a); und
wenigstens einen Hauptsteuerungsprozessor (200a) in Kommunikation mit dem ersten Wandler (220a), und so eingerichtet, dass er in einem zweiten Kommunikationsprotokoll kommuniziert;
wobei der erste Wandler (220a) dafür eingerichtet ist, Kommunikation von dem wenigstens einem IO-Prozessor (120a) mit dem wenigstens einem Hauptsteuerungsprozessor (200a) zu übersetzen, indem es das erste Kommunikationsprotokoll in das zweite Kommunikationsprotokoll übersetzt, und um Kommunikation von dem wenigstens einem Hauptsteuerungsprozessor (200a) mit dem wenigstens einem IO-Prozessor (120a) zu übersetzen, indem er das zweite Kommunikationsprotokoll in das erste Kommunikationsprotokoll übersetzt;
einen aktuellen Kommunikationsprozessor (210), der in dem zweiten Kommunikationsprotokoll kommuniziert;
wenigstens eine vorhandene periphere Hilfsturbinenkomponente (150), die in einem dritten Kommunikationsprotokoll über ein bestehendes Netzwerk (190) kommuniziert; und
einen zweiten Wandler (220a) in Kommunikation mit der wenigstens einen vorhandenen peripheren Hilfsturbinenkomponente (150) und in Kommunikation mit dem wenigstens einen aktuellen Kommunikationsprozessor (210);
wobei der zweite Wandler (220a) Kommunikation von dem aktuellen Kommunikationsprozessor (210) von dem zweiten Kommunikationsprotokoll in das dritte Kommunikationsprotokoll übersetzt und ferner die übersetzte Kommunikation an die wenigstens eine vorhandene periphere Hilfsturbinenkomponente (150) überträgt; und
wobei der zweite Wandler (220a) Kommunikation von der wenigstens einen vorhandenen peripheren Hilfsturbinenkomponente (150) von dem dritten Kommunikationsprotokoll in das zweite Kommunikationsprotokoll übersetzt und ferner die übersetzte Kommunikation an den aktuellen Kommunikationsprozessor (210) überträgt.

8. System nach Anspruch 7, wobei das erste Kommunikationsprotokoll das RS485-Protokoll oder das ARCNET-Protokoll ist; und wobei das zweite Kommunikationsprotokoll das Ethernet-Protokoll ist.

9. System nach Anspruch 7 oder Anspruch 8, das ferner wenigstens eine vorhandene Endgerätekarte (170a) in Kommunikation mit dem wenigstens einem vorhandenen IO-Prozessor (120a) aufweist.

## Revendications

1. Procédé pour modifier un système de commande (100) de turbine, comprenant :
le remplacement d'au moins un processeur de commande principal existant (140a), communiquant suivant un premier protocole de communication, par au moins un processeur de commande principal (200a) en service communiquant suivant un deuxième protocole de communication ;
le maintien d'au moins un processeur d'E/S existant (120a) en communication avec au moins un dispositif de contrôle (130) de turbine communiquant suivant ledit premier protocole de communication ;
**caractérisé par** :
la mise d'un premier convertisseur (220a) en communication avec ledit au moins un processeur de commande principal (200a) en service et en communication avec ledit au moins un processeur d'E/S existant (120a) ;
dans lequel ledit premier convertisseur (220a) convertit les communications provenant dudit au moins un processeur de commande principal (200a) en service dudit deuxième protocole de communication en ledit premier protocole de communication et transmet en outre lesdites communications converties audit au moins un processeur d'E/S existant (120a) ; et
dans lequel ledit premier convertisseur (220a) convertit les communications provenant dudit au moins un processeur d'E/S existant (120a) dudit premier protocole de communication en ledit deuxième protocole de communication et transmet en outre les communications converties audit au moins un processeur de commande principal (200a) en service, comprenant en outre :
le remplacement d'au moins un protocole de communication existant (180), communiquant suivant un troisième protocole de communication, par un processeur de communications (210) en service communiquant suivant le deuxième protocole de communication ;
le maintien d'au moins un organe périphérique auxiliaire de turbine existant (150) en communication suivant ledit troisième protocole de communication ; et
la mise d'un second convertisseur (220a) en communication avec ledit au moins un organe périphérique auxiliaire de turbine existant (150) et en communication avec ledit au moins un processeur de communications (210) en service ;
dans lequel ledit second convertisseur (220a) convertit les communications provenant dudit au moins un processeur de communications en service (210) dudit deuxième protocole de communication en ledit troisième protocole de communication et transmet en outre les communications converties audit au moins un organe périphérique auxiliaire de turbine existant (150) ; et
dans lequel ledit second convertisseur (220a) convertit les communications provenant dudit au moins un organe périphérique auxiliaire de turbine existant (150) dudit troisième protocole de communication en ledit deuxième protocole de communication et transmet en outre les communications converties audit au moins un processeur de communications en service (210).

2. Procédé selon la revendication 1, dans lequel ledit premier protocole de communication est le protocole RS485 ou le protocole ARCNET, et dans lequel ledit deuxième protocole de communication est le protocole Ethernet.

3. Procédé selon l'une quelconque des revendications précédentes, comportant en outre le maintien d'au moins un bornier existant (170a) en communication avec ledit au moins un processeur d'E/S existant (120a).

4. Procédé selon l'une quelconque des revendications précédentes, dans lequel ledit au moins un processeur de commande principal existant (140a), communiquant suivant ledit premier protocole de communication, est associé à un système de commande de turbine existant, et dans lequel ledit processeur de commande principal (200a) en service communiquant suivant ledit deuxième protocole de communication est associé au système de commande de turbine en service.

5. Procédé selon l'une quelconque des revendications précédentes, dans lequel ledit au moins un organe périphérique auxiliaire de turbine existant (150) comprend un second système de commande.

6. Procédé selon l'un quelconque des revendications précédentes, dans lequel ledit troisième protocole de communication est le protocole ARCNET.

7. Système de commande pour commander au moins une turbine, comportant :
au moins un processeur d'E/S (120a) en communication avec au moins un dispositif de contrôle (130) de turbine et conçu pour communiquer suivant un premier protocole de communication ;
dans lequel
le processeur d'E/S (120a) est un processeur d'E/S existant conservé pendant une amélioration du système, et comportant en outre :
un premier convertisseur (220a) en communication avec ledit au moins un processeur (120a) ; et
au moins un processeur principal de commande (200a) en communication avec ledit premier convertisseur (220a) et conçu pour communiquer suivant un deuxième protocole de communication ;
dans lequel ledit premier convertisseur (220a) est conçu pour transmettre des communications dudit au moins un processeur d'E/S existant (120a) audit au moins un processeur principal de commande (200a) en convertissant ledit premier protocole de communication en ledit deuxième protocole de communication, et pour transmettre des communications dudit au moins un processeur de commande principal (200a) audit au moins un processeur d'E/S (120a) en convertissant ledit deuxième protocole de communication en ledit premier protocole de communication,
comportant en outre :
un processeur de communications (210) en service communiquant suivant le deuxième protocole de communication ;
au moins un organe périphérique auxiliaire de turbine existant (150) communiquant suivant un troisième protocole de communication via un réseau existant (190) ; et
un second convertisseur (220a) en communication avec ledit au moins un organe périphérique auxiliaire de turbine existant (150) et en communication avec ledit processeur de communications (210) en service ;
dans lequel ledit second convertisseur (220a) convertit les communications provenant dudit processeur de communications en service (210) dudit deuxième protocole de communication en ledit troisième protocole de communication et transmet en outre les communications converties audit au moins un organe périphérique auxiliaire de turbine existant (150) ; et
dans lequel ledit second convertisseur (220a) convertit les communications provenant dudit au moins un organe périphérique auxiliaire de turbine existant (150) dudit troisième protocole de communication en ledit deuxième protocole de communication et transmet en outre les communications converties audit processeur de communications en service (210).

8. Système selon la revendication 7, dans lequel ledit premier protocole de communication est le protocole RS485 ou le protocole ARCNET, et dans lequel ledit deuxième protocole de communication est le protocole Ethernet.

9. Système selon la revendication 7 ou la revendication 8, comportant en outre au moins un bornier existant (170a) en communication avec ledit au moins un processeur d'E/S existant (120a).
